# EUROPÄISCHE PATENTSCHRIFT

(11) **EP 1 210 213 B1**
(45) Veröffentlichungstag und Bekanntmachung des Hinweises auf die Patenterteilung: **03.09.2003**
(21) Anmeldenummer: 00912621.0
(22) Anmeldetag: 18.03.2000
(51) Int. Cl.: B25J 1/00

(54) **MITTEL ZUM WECHSELN VON HANDSCHUHEN**
DEVICE FOR CHANGING GLOVES
DISPOSITIF DE REMPLACEMENT DE GANTS

(30) Priorität: 14.08.1999 DE 19938667
(43) Veröffentlichungstag der Anmeldung: 05.06.2002
(73) Patentinhaber: Keil, Michael, 35305 Grünberg (DE)
(72) Erfinder: Keil, Michael, 35305 Grünberg (DE)
(74) Vertreter: Böck, Bernhard
(86) Internationale Anmeldenummer: EP0002428
(87) Internationale Veröffentlichungsnummer: WO01012393

(56) Entgegenhaltungen:
- DE-A- 4 341 599
- US-A- 5 104 206
- PATENT ABSTRACTS OF JAPAN vol. 003, no. 015 (E-089), 9. Februar 1979 (1979-02-09) & JP 53 143294 A (HITACHI CABLE LTD;OTHERS: 01), 13. Dezember 1978 (1978-12-13)

## Beschreibung

Die Erfindung betrifft eine Dichtscheibe gemäß dem Oberbegriff des Anspruches 1. Eine derartige Vorrichtung ist aus der JP-53143294 bekannt.

Aus der DE 43 41 599 A1 ist es bekannt, den einzusetzenden Handschuh auf einen Spannring aufzuziehen und in das Innere der Kammer einzubringen. Von außen wird nun mittels des auszuwechselnden Handschuhs der einzusetzende Handschuh samt Spannring ergriffen und in die Hülse gezogen. Nun wird ein von einem Spindelstab gehaltener Einsatzstreifen einer Abzieheinrichtung von außen durch beide Spannringe hindurchgeführt und mit einer Ringschulter an die Innenkante des Spannringes angelegt. Der Spindelstab lagert drehbar in einer Gewindebuchse des Einsatzstreifens sowie in einer zentralen Gewindebuchse eines hantelähnlichen Stützjoches, das mit Schultern zweier Endplatten auf die Außenkante der Hülse aufgesetzt wird. Durch Drehen des Spindelstabes mittels eines Handgriffes wird der zu entfernende Spannring unter Überwindung der Klemmkraft zwischen Hülse und Haftring an das Stützjoch herangezogen. Die freie Höhe am Stützjoch ist so bemessen, dass bei diesem gleichzeitig der neue Spannring die beschriebene Klemmlage der Hülse erreicht. Schließlich kann nun jener Einsatzstreifen vom Spindelstab genommen, und die Abzieheinrichtung kann unter Mitnahme des alten Spannringes samt Ärmelhandschuh entfernt werden.

Dieses bekannte Verfahren zum Wechseln von Handschuhen weist den gravierenden Nachteil auf, dass recht aufwendige Abzieheinrichtungen mit Spindelstäben, Einsatzstreifen, Stützjochen usw. notwendig sind. Diese Abziehvorrichtung ist nicht nur recht aufwendig herzustellen, sondern sie kann auch nur schwierig bedient werden. Durch Fehlbedienung der Abzieheinrichtung kann es immer wieder zu Beschädigungen des einzusetzenden Handschuhs kommen, wodurch dieser unbrauchbar wird.

Der Erfindung liegt daher die Aufgabe zugrunde, eine Dichtscheibe der eingangs genannten Art vorzuschlagen, mit welcher auf einfache Art und Weise ohne eine aufwendige Abziehvorrichtung ein Handschuh gewechselt werden kann, wobei insbesondere auch Beschädigungen an dem einzusetzenden Handschuh vermieden werden.

Diese Aufgabe wird mit den Merkmalen des Anspruches 1 gelöst.

Die erfindungsgemäße Dichtscheibe ist wesentlich einfacher gestaltetet, auch die Bedienung und Handhabung der Dichtscheibe ist einfacher als bei den bekannten Dichtscheiben, wodurch der gesamte Wechsel schneller abläuft.

Besonders vorteilhaft ist es, wenn der Stulpen des einzusetzenden Handschuhs auch dann bereits außerhalb der Kammer über die Dichtscheibe gezogen wird, wenn der auszuwechselnde Handschuh nach außen entfernt wird. Dichtscheibe und einzusetzender Handschuh werden dann auf Vorrat so in die Kammer eingebracht, dass sie in Griffweite eines Handschuharbeitsplatzes liegen.

Mit einer erfindungsgemäßen Dichtscheibe können neu einzusetzende Handschuhe dichtend gegen die Hülsenwandung oder den hierin eingesetzten Handschuh gedrückt werden, ohne dass dabei der Handschuh beschädigt wird.

Erfindungsgemäß hat der Schlauch im entlüfteten Zustand eine äußere, rillenförmige konkave Wölbung, wobei diese konkav gewölbte Oberfläche hinter dem Rand der Dichtscheibe liegt. Der Schlauch verliert hingegen diese rillenartige konkave Wölbung, sobald er aufgeblasen wird. Dadurch vergrößert sich der Durchmesser der Dichtscheibe, und der Schlauch kann selbst dichtend gegen die Hülsenwandung gedrückt werden oder den Handschuhstulpen gegen die Hülsenwand drücken.

In einem besonderen Ausführungsbeispiel besteht die Dichtscheibe aus zwei voneinander beabstandeten Scheiben. Der Schlauch kann dann zwischen den beiden Scheiben festgelegt sein. In den Scheiben können jeweils Ausnehmungen vorgesehen sein, wobei die eine Scheibe einen die Ausnehmung verschließenden Deckel hat. An einem solchen Deckel kann gemäß der Erfindung ein Griff vorgesehen sein.

Zwischen den beiden Scheiben ist vorteilhaft eine Pumpe angebracht, mit welcher der Schlauch verbunden ist. Für den Betrieb der Pumpe sind vorteilhaft wieder aufladbare Batterien zwischen den Scheiben einsetzbar. Die Pumpe kann weiter vorteilhaft über einen im Deckel angebrachten Schalter betätigt werden. Die Aufladung erfolgt vorteilhaft induktiv.

An der Dichtscheibe kann gemäß der Erfindung ein Entlüftungsventil vorgesehen sein, welches mit dem Schlauch verbunden ist.

Eine Weiterbildung einer erfindungsgemäßen Dichtscheibe kann auch ein Manometer aufweisen. Dann ist die Vorder- und Hinterseite vorteilhaft mittels zumindest eines Ventils strömungstechnisch verbindbar.

Eine erfindungsgemäße Dichtscheibe kann zum Wechseln von Handschuhen an einem Handschuharbeitsplatz verwendet werden, zum Verschließen und zur Messung eines Druckes auf der Scheibenhinterseite benutzt werden.

Zum Entfernen des auszuwechselnden Handschuhs nach innen wird die Dichtscheibe (1) mit dem aufgezogenen Handschuh in die noch mit dem zu wechselnden Handschuh verschlossen, die Hülse eingesetzt und abgedichtet. Anschließend wird der zu wechselnde Handschuh von der Hülse abgenommen und etwas in die Hülse eingeschoben. Der einzuwechselnde Handschuh wird auf die Hülse aufgezogen und anschließend die Dichtscheibe (1) entlüftet und herausgenommen.

Der Querschnitt der Hülse ist vorteilhaft rund ausgebildet. Für die Verbreiterung des Arbeitsbereiches ist es jedoch in vielen Fällen vorteilhaft, wenn die Hülse eine ovale Öffnung aufweist, deren größte Achse so angeordnet ist, dass der gewünschte Arbeitsbereich geschaffen wird.

Ausführungsbeispiele sind anhand der Zeichnungen näher beschrieben. Darin zeigen
- Fig. 1: eine Seitenansicht einer ersten erfindungsgemäßen Dichtscheibe,
- Fig. 2: eine Draufsicht auf die Dichtscheibe gemäß Fig. 1,
- Fig. 3: die Innenseite eines Deckels der Dichtscheibe gemäß Fig. 1.
- Fig. 4: die Dichtscheibe gemäß Fig. 1 mit abgenommenem Deckel,
- Fig. 5: eine zweite erfindungsgemäße Dichtscheibe in der Seitenansicht,
- Fig. 6: eine Draufsicht auf die Dichtscheibe gemäß Fig. 5,
- Fig. 7: die Innenseite eines abgenommenen Deckels der Dichtscheibe gemäß Fig. 5,

- Fig. 8: die Dichtscheibe gemäß Fig. 5 bei abgenommenem Deckel,
- Fig. 9: einen Teilschnitt durch die Dichtscheibe gemäß der Linien IV-IV in Fig. 5 mit aufgeblasenem Schlauch und
- Fig. 10: einen Schnitt entsprechend Fig. 9, jedoch mit entlüftetem Schlauch.

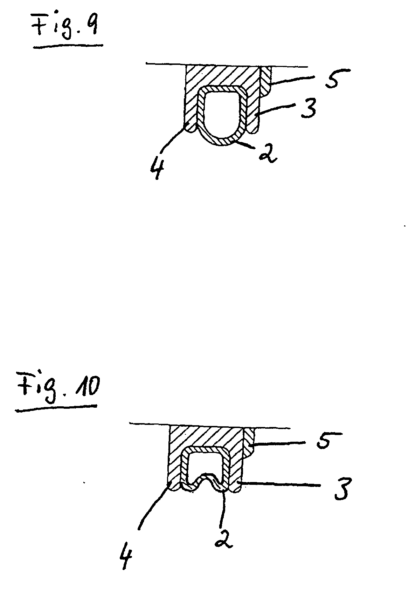

Die erfindungsgemäße Dichtscheibe 1 weist eine vordere Scheibe 3 sowie eine davon beabstandete hintere Scheibe 4 auf. Zwischen den beiden Scheiben ist im Bereich der Ränder der Scheiben ein aufblasbarer Schlauch 2 angebracht. Die vordere Scheibe 3 weist eine konzentrische Ausnehmung auf, welche von einem Deckel 5 verschlossen wird. Der Deckel und die hintere Scheiben weisen eine konzentrische Bohrung 14 auf. Diese Bohrung dient der Befestigung eines Griffes 6. Der Griff weist dazu ein Griffteil 61 auf, welches von der Seite der hinteren Scheibe mit einer Schraube 62 an der Dichtscheibe festgeschraubt ist. Ferner ist dem Deckel 5 eine Schalter 7 und ein Entlüftungsventil 13 eingesetzt. Zwischen der vorderen und der hinteren Scheibe (Fig. 4) ist ein Batterieblock 9 angebracht, welcher aus drei hintereinander geschalteten Einzelbatterien besteht. Der Minus- und der Pluspol des Batterieblocks 9 sind dabei jeweils über elektrische Leitungen 10 mit einem elektrischen Verteiler 11 verbunden. Der Pluspol des elektrischen Verteilers 11 ist über weitere elektrische Leitungen zunächst an dem Schalter 7, dann an einer zwischen den Scheiben 3,4 angebrachten Pumpe 8 angeschlossen. Der Minuspol des elektrischen Verteilers 11 ist hingegen direkt mit der Pumpe 8 verbunden. Durch Betätigung des Schalters 7 kann somit ein elektrischer Stromkreis zwischen dem Batterieblock 9 und der elektrischen Pumpe 8 geschlossen und geöffnet werden. Mit der elektrischen Pumpe 8 ist des Weiteren eine Druckleitung 21 verbunden, welche einerseits einen Anschluss an das Entlüftungsventil 13 hat und andererseits mit einem Anschlussstutzen 12 des aufblasbaren Schlauches 2 verbunden ist.

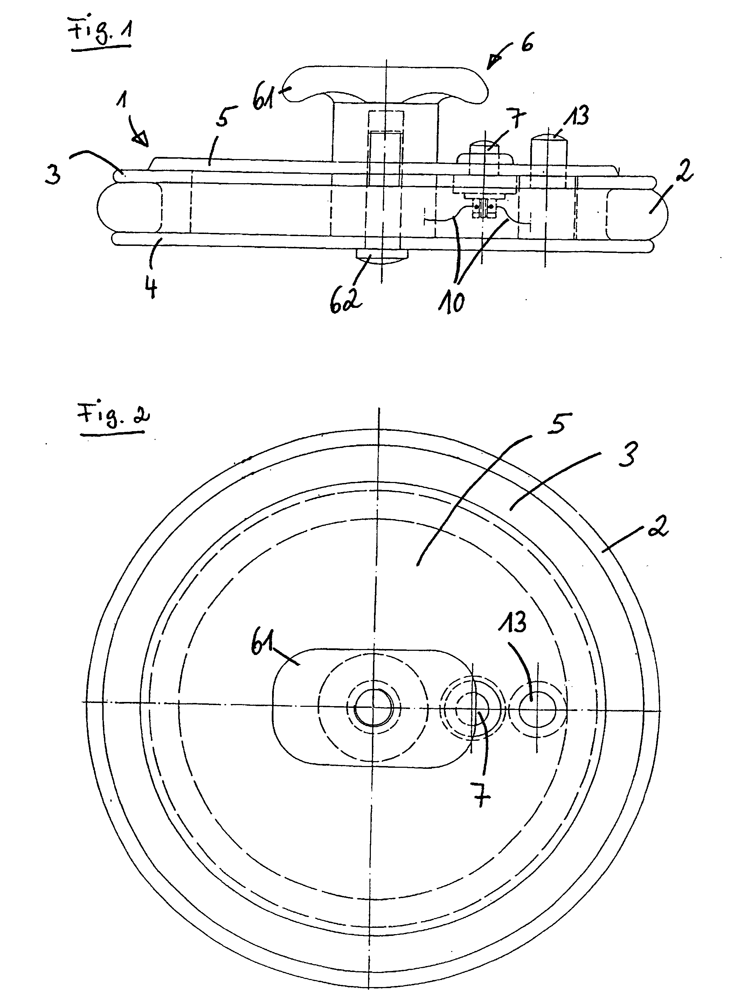

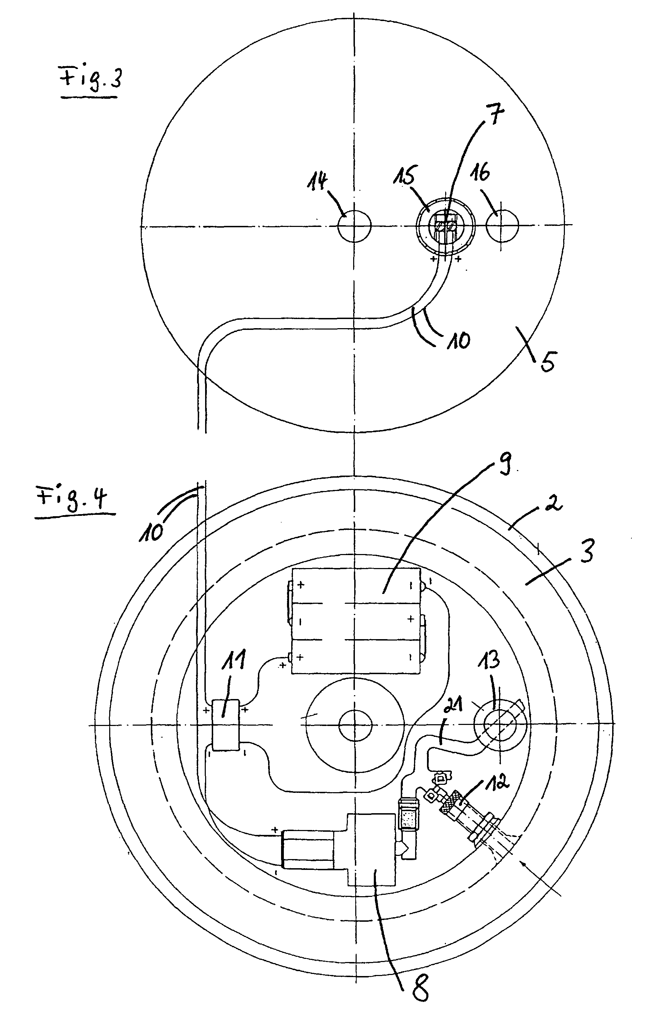

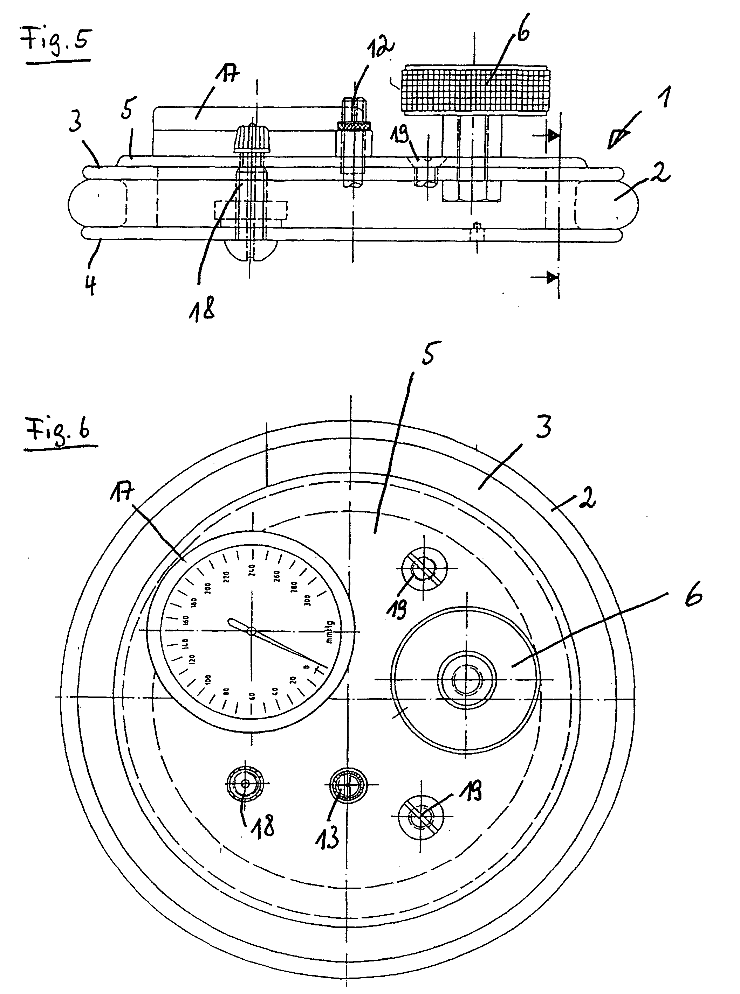

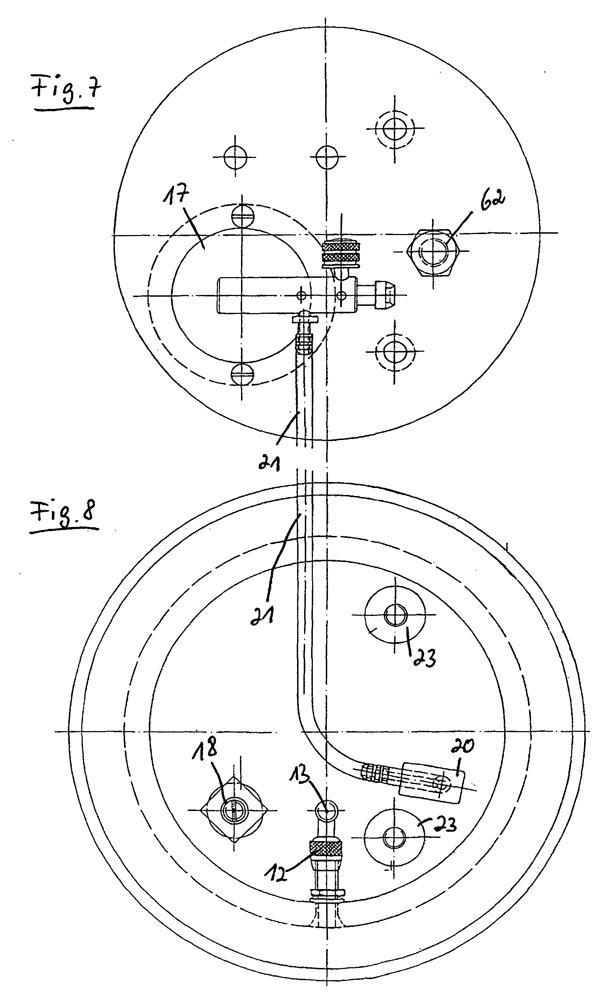

Die bisher beschriebene Dichtscheibe gemäß der Fig. 1 bis 4 ist zum Verschließen von Öffnungen in der Kammer eines Handschuharbeitsplatzes geeignet. Dazu wird die Dichtscheibe von außen die Öffnung der Kammer einfassende Buchse eingesetzt und rechtwinklig zu der Wandung der Hülse ausgerichtet. Sodann wird der Schalter 7 betätigt. Dadurch schließt sich der Stromkreis, und die Pumpe 8 wird in Gang gesetzt. Da das Entlüftungsventil 13 im Normalzustand gesperrt ist, drückt die Pumpe 8 über die Druckleitung 21 Luft in den Schlauch 2, welcher sich dadurch aufbläht. Dabei legt sich der Schlauch 2 dichtend an die Wandung der Hülse, und die Öffnung in der Kammer ist verschlosssen.

Gleichfalls ist die erfindungsgemäße Dichtscheibe 1 gemäß der Fig. 1 bis 4 für den Wechsel von Handschuhen an dem Handschuharbeitsplatz geeignet. Dazu muss inner- oder außerhalb der Kammer der einzuwechselnde Handschuh über die Dichtscheibe 1 gezogen werden, wobei das freie Ende des Stulpens des Handschuhs die Dichtscheibe überlappt. Dann kann die Dichtscheibe samt des einzuwechselnden Handschuhs in das Innere der Kammer gebracht werden. Von außen kann nun der Bediener mit dem auszuwechselnden Handschuh die Dichtscheibe samt einzuwechselndem Handschuh ergreifen und in die Hülse ziehen. Die Dichtscheibe 1 wird in der Hülse etwa rechtwinklig zu der Wandung ausgerichtet, und der Schalter 7 wird betätigt, worauf sich der Schlauch 2 mit Luft füllt und den einzuwechselnden Handschuh gegen die Wandung der Hülse drückt. Dadurch sind dann die beiden Seiten voneinander abgeschlossen. Nun kann der Bediener den auszuwechselnden Handschuh von der Hülse abnehmen und außen entsorgen. Das überlappende freie Ende des einzuwechselnden Handschuhs wird nun an der Hülse dichtend befestigt. Danach kann der Schlauch 2 mittels des Entlüftungsventiles 13 entlüftet werden und die Dichtscheibe 1 aus der Hülse entnommen werden. Zum Entsorgen des Handschuhs nach innen wird die Dichtscheibe nebst aufgezogenem Handschuh in die noch mit dem zu wechselnden Handschuh verschlossene Hülse von außen eingesetzt und anschließend der Schlauch der Dichtscheibe 1 aufgeblasen. Der alte Handschuh kann nun von der Hülse abgenommen und der neue auf die Hülse aufgezogen werden. Nach dem Entfernen der Dichtscheibe wird der alte Handschuh in die Kammer geschoben.

Die Dichtscheibe gemäß der Fig. 5 bis 8, die ebenso wie die Dichtscheibe gemäß der Fig. 1 bis 4 zum Auswechseln von Handschuhen und zum Verschließen der Hülse geeignet ist, kann zusätzlich noch für Dichtigkeitsprüfungen von Handschuhen benutzt werden. Dazu wird die Dichtscheibe in eine mit einem Handschuh ausgestattete Hülse eingesetzt, die externe Druckluftversorgung wird an dem Schlauchanschlussstutzen 12 angeschlossen und der Schlauch 2 wird aufgepumpt. Sodann wird die externe Druckluftversorgung an dem Ventil 18 angeschlossen, und der Raum hinter der Dichtscheibe 1 wird mit Druckluft gefüllt. Der Handschuh wird dadurch aufgebläht. Ist ein Mindestdruck erreicht, wird das Ventil 18 geschlossen und die externe Druckluftversorgung entfernt. Beobachtet man nun an dem Manometer 17, dass der Druck hinter der Scheibe 4 abfällt, so kann dies - da die Dichtscheibe 1 selbst die Hülse dichtend abschließt - nur aufgrund eines Defektes in dem Handschuh geschehen. Der Handschuh muss dann gewechselt werden. Bleibt der Druck jedoch konstant, ist der Handschuh nach wie vor für den Gebrauch geeignet. Nach Beendigung des Tests wird nun das Ventil 18 wieder geöffnet und der Raum hinter der Dichtscheibe 1 entlüftet. Sodann kann die Dichtscheibe 1 auf die beschriebene Art und Weise aus der Hülse entnommen werden.

Die Fig. 9 und 10 zeigen jeweils einen Schnitt durch den Schlauch 2, einmal im aufgepumpten, das andere Mal im entlüfteten Zustand. Im entlüfteten Zustand nimmt der Schlauch 2 eine Form ein, die eine äußere, rillenartig konkav gewölbte Oberfläche hat. Diese konkav gewölbte Oberfläche liegt hinter dem Rand der Dichtscheibe 1. Dadurch kann der Schlauch 2 beim Einsetzen der Dichtscheibe 1 in die Hülse nicht beschädigt werden. Ist die Dichtscheibe 1 jedoch in die Hülse eingesetzt, wird der Schlauch 2 aufgepumpt, überragt dann wesentlich die Ränder der Scheiben 3, 4 und liegt dichtend an der Hülsenwandung an.

### Bezugszeichenliste

- 1: Dichtscheibe
- 2: Schlauch
- 3: vordere Scheibe
- 4: hintere Scheibe
- 5: Deckel
- 6: Griff
- 61: Griffteil
- 62: Schraube
- 7: Schalter
- 8: Pumpe
- 9: Batterien
- 10: elektrische Leitung
- 11: elektrische Verteiler
- 12: Schlauchanschlussstutzen
- 13: Entlüftungsventil
- 14: Bohrung für Schraube
- 15: Bohrung für Schalter
- 16: Bohrung für Entlüftungsventil
- 17: Manometer
- 18: Ventil
- 19: Deckelschraube
- 20: Anschlussstutzen für Druckmessung
- 21: Druckleitung
- 22: Distanzringe

## Patentansprüche

1. Dichtscheibe (1) mit einem Dichtelemen (2) zum Wechseln von Handschuhen eines in einer Wand einer abgeschlossenen Kammer vorgesehenen Handschuharbeitsplatzes und zum Verschließen der Öffnung einer in der Wand einer Kammer eingesetzten Hülse, wobei die Dichtscheibe (1) im Bereich ihres Randes einen das Dichtelement bildenden und aufblasbaren Schlauch (2) aufweist, welcher im aufgeblasenen Zustand die Dichtscheibe (1) überragt,
**dadurch gekennzeichnet, dass**
der Schlauch (2) im entlüfteten Zustand eine äußere, rillenartig konkave Wölbung aufweist, wobei diese konkav gewölbte Oberfläche hinter dem Rand der Dichtscheibe liegt.

2. Dichtscheibe nach Anspruch 1, **dadurch gekennzeichnet, dass** diese zwei voneinander beabstandete Scheiben (3, 4) aufweist.

3. Dichtscheibe nach Anspruch 2 **dadurch gekennzeichnet, dass** der Schlauch (2) zwischen den beiden Scheiben (3, 4) festgelegt ist.

4. Dichtscheibe nach Anspruch 3, **dadurch gekennzeichnet, dass** die Scheiben (3, 4) je eine Ausnehmung ausweisen und die eine Scheibe (3) einen die Ausnehmung verschließenden Deckel (5) hat.

5. Dichtscheibe nach Anspruch 4, **dadurch gekennzeichnet, dass** an dem Deckel (5) ein Griff (6) vorgesehen ist.

6. Dichtscheibe nach einem der Ansprüche 2 bis 5, **dadurch gekennzeichnet, dass** zwischen den Scheiben (3, 4) eine Pumpe (8) angebracht ist, welche mit dem Schlauch (2) verbunden ist.

7. Dichtscheibe nach Anspruch 4, **dadurch gekennzeichnet, dass** zwischen den Scheiben (3, 4) Batterien, aufladbare Batterien, (9) einsetzbar sind.

8. Dichtscheibe nach einem der Ansprüche 6 oder 7, **dadurch gekennzeichnet, dass** in der einen Scheibe (3) oder dem Deckel (5) ein Schalter (7) für die Pumpe (8) angebracht ist

9. Dichtscheibe nach einem der Ansprüche 1 bis 8, **dadurch gekennzeichnet, dass** ein Entlüftungsventil (13) vorgesehen ist, welches mit dem Schlauch (2) verbunden ist

10. Dichtscheibe nach einem der Ansprüche 1 bis 9, **dadurch gekennzeichnet, dass** die Dichtscheibe (1) ein Manometer (17) aufweist.

11. Dichtscheibe nach Anspruch 10, **dadurch gekennzeichnet, dass** die beiden Seiten der Dichtscheibe (1) mittels zumindest eines Ventils (18) strömungstechnisch verbindbar sind.

12. Dichtscheibe nach einem der Ansprüche 1 bis 11, **dadurch gekennzeichnet, dass** die Dichtscheibe oval oder rund ausgebildet ist.

## Claims

1. A sealing disc (1) with a sealing member(2) for changing gloves of a glove workstation provided in a wall of a closed chamber and for closing the opening of a sleeve inserted in a wall of a chamber, the sealing disc (1) having - in the region of its margin - an inflatable hose (2) forming the sealing member, which hose projects beyond the sealing disc (1) in the inflated state,
**characterised in that**
in the deflated state the hose (2) exhibits an external, groove-like concave curvature, this concavely arched surface being positioned behind the margin of the sealing disc.

2. A sealing disc according to Claim 1, **characterised in that** it exhibits two discs (3, 4) spaced apart from one another.

3. A sealing disc according to Claim 2, **characterised in that** the hose (2) is fastened between the two discs (3, 4).

4. A sealing disc according to Claim 3, **characterised in that** the discs (3, 4) each exhibit a recess and the one disc (3) has a cover (5) closing off the recess.

5. A sealing disc according to Claim 4, **characterised in that** a handle (6) is provided on the cover (5).

6. A sealing disc according to one of Claims 2 to 5, **characterised in that** a pump (8) is mounted between the discs (3, 4), which is connected to the hose (2).

7. A sealing disc according to Claim 4, **characterised in that** batteries, chargeable batteries (9), are insertable between the discs (3, 4).

8. A sealing disc according to one of Claims 6 or 7, **characterised in that** a switch (7) for the pump (8) is mounted in the one disc (3) or in the cover (5).

9. A sealing disc according to one of Claims I to 8, **characterised in that** a venting valve (13) connected to the hose (2) is provided.

10. A sealing disc according to one of Claims 1 to 9, **characterised in that** the sealing disc (1) exhibits a manometer (17).

11. A sealing disc according to Claim 10, **characterised in that** the two sides of the sealing disc (1) are flow-connectable with the use of at least one valve (18).

12. A sealing disc according to one of Claims I to 11, **characterised in that** the sealing disc is oval or round.

## Revendications

1. Disque d'étanchéité (1), comportant un élément d'étanchéité (2) pour changer des gants dans un poste de travail avec gants prévu dans la paroi d'une chambre close, et pour fermer l'ouverture d'un manchon inséré dans la paroi d'une chambre, le disque d'étanchéité (1) comprenant dans la région de son bord un tuyau gonflable (2) formant l'élément d'étanchéité et qui fait saillie au-delà du disque d'étanchéité lorsqu'il est gonflé,
**caractérisé en ce que**
le tuyau (2) présente à l'état dégonflé une courbure extérieure concave en forme de rainure, cette surface courbe concave étant située derrière le bord du disque d'étanchéité.

2. Disque d'étanchéité selon la revendication 1, **caractérisé en ce qu'**il comporte deux disques (3, 4) distants l'un de l'autre.

3. Disque d'étanchéité selon la revendication 2, **caractérisé en ce que** le tuyau (2) est fixé entre les deux disques (3, 4).

4. Disque d'étanchéité selon la revendication 3, **caractérisé en ce que** les disques (3, 4) comportent un évidement chacun, et qu'un des disques (3) présente un couvercle (5) fermant cet évidement.

5. Disque d'étanchéité selon la revendication 4, **caractérisé en ce qu'**une poignée (6) est prévue sur le couvercle (5).

6. Disque d'étanchéité selon l'une des revendications 2 à 5, **caractérisé en ce qu'**une pompe (8) reliée au tuyau (2) est disposée entre les disques (3, 4).

7. Disque d'étanchéité selon la revendication 4, **caractérisé en ce que** des batteries, des batteries rechargeables (9), peuvent être insérées entre les disques(3, 4).

8. Disque d'étanchéité selon la revendication 6 ou 7, **caractérisé en ce qu'**un interrupteur (7) pour la pompe (8) est monté dans l'un des disques (3) ou le couvercle (5).

9. Disque d'étanchéité selon l'une des revendications 1 à 8, **caractérisé en ce qu'**une soupape de ventilation (13) est prévue qui est raccordée au tuyau (2).

10. Disque d'étanchéité selon l'une des revendications 1 à 9, **caractérisé en ce que** le disque d'étanchéité (1) comporte un manomètre (17).

11. Disque d'étanchéité selon la revendication 10, **caractérisé en ce que** les deux côtés du disque d'étanchéité (1) sont aptes à être connectés selon la technique des fluides par l'intermédiaire d'au moins une soupape (18).

12. Disque d'étanchéité selon l'une des revendications 1 à 11, **caractérisé en ce que** le disque est ovale ou circulaire.
